# EUROPÄISCHE PATENTSCHRIFT

(11) **EP 0 515 890 B1**
(45) Veröffentlichungstag und Bekanntmachung des Hinweises auf die Patenterteilung: **04.08.1999**
(21) Anmeldenummer: 92107944.8
(22) Anmeldetag: 12.05.1992
(51) Int. Cl.: G06T 7/20, G01S 3/786

(54) **Verfahren zur Überwachung von Gelände**
Terrain monitoring method
Méthode de surveillance de terrains

(30) Priorität: 31.05.1991 DE 4117774
(43) Veröffentlichungstag der Anmeldung: 02.12.1992
(73) Patentinhaber: LFK Lenkflugkörpersysteme GmbH, 81663 München (DE)
(72) Erfinder: Coy, Dieter, Dr.-Ing., W-2000 Wedel (DE); Nahapetian, Vahe, W-2000 Wedel (DE)
(74) Vertreter: Hummel, Adam

(56) Entgegenhaltungen:
- EP-A- 0 293 644
- EP-A- 0 306 250
- EP-A- 0 423 984

## Beschreibung

Die Erfindung betrifft ein Verfahren gemäß dem Oberbegriff von Anspruch 1.

Die Überwachung von Gelände sowie von auf dem Gelände befindlichen Einrichtungen, wie beispielsweise Gebäuden, mittels TV- oder IR-Kameras und nachgeordneter Auswerteeinrichtung einschließlich Monitore und Alarmeinrichtungen ist allgemein bekannt. Ein bekanntes Verfahren besteht darin, Differenzbilder von aufeinanderfolgenden, von einer Kamera erzeugten Bildern zu erzeugen. Die signifikant von Null verschiedenen Ergebnisse werden analysiert, wobei hierbei "signifikant" Ergebnisse bedeutet, die hinreichend weit weg vom Rauschpegel liegen. Von Nachteil ist, daß in den Differenzbildern Objekte enthalten sein können, die sich geringfügig bewegen (z.B. Bäume im Wind), aber nicht zur Zielgruppe der zu erfaßenden Objekte (z.B. Einbrecher) gehören. Ferner werden nachteiligerweise sehr viele Objekte erzeugt, die die Analyseeinheit überlasten.

Der Erfindung liegt daher die Aufgabe zugrunde, ein Verfahren der eingangs genannten Art vorzuschlagen, mit dem - unter den Voraussetzungen einer räumlich feststehenden Kamera und sich bewegenden und größer werdenden Zielobjekten- durch einen Ähnlichkeitsvergleich aufeinanderfolgender Bilder der Einfluß von großen bewegten Objekten und anderen Störungen eliminiert wird.

Die Aufgabe wird erfindungsgemäß durch die kennzeichnenden Verfahrensmerkmale von Anspruch 1 gelöst.

Die Verfahrensschritte 1 bis 4 dienen zum Starten des erfindungsgemäßen Verfahrens. Der im Verfahrensschritt 6 beschriebene Lernprozeß für den Grad der Ähnlichkeit zweier aufeinanderfolgender korrespondierender Fenster stellt sicher, daß Fenster von niedriger Definition im Hintergrund, beispielsweise wolkenloser Himmel oder verrauschte Eingangs-Signale niedrigere Werte der L-Matrix aufweisen, als höher definierte Fenster mit Inhalten wie Horizont, Bäume, Wolken usw.

Das erfindungsgemäße Verfahren, das auf einer Analyse der Korrelationsergebnisse zwischen zwei Bildern von derselben Szene zu verschiedenen Zeitpunkten, die beispielsweise aufgabenangepaßt einen zeitlichen Abstand von etwa 20ms bis 1s aufweisen können, beruht, bringt den Vorteil einer erheblichen Reduktion der Anzahl von sogenannten Falschalarmen mit sich. Vorteilhafterweise bietet das Verfahren eine schnellere Analyse und einen geringeren Speicheraufwand, da mit seiner Hilfe vorzugsweise auch sehr kleine Objekte extrahiert werden können und zudem mit großen Sehfeldern gearbeitet werden kann.

Ausgestaltungen des erfindungsgemäßen Verfahrens sind in den Unteransprüchen 2 bis 10 beschrieben.

Eine besondere Ausgestaltung betrifft die Differenzmatrix, die zentraler Verfahrensschritt für alle folgenden Verfahrensschritte und in Anspruch 3 beansprucht ist. Sie ist dadurch gekennzeichnet, daß bei der Bildung der D-Matrix die Werte der D-Matrix
- auf Null gesetzt werden, wenn die Werte der R-Matrix größer als die Werte der L-Matrix sind, - als positive Differenzwerte gespeichert werden, wenn die Werte der R-Matrix kleiner als die Werte der L-Matrix sind und
- weiteren Analysen unterzogen werden, wenn die Werte der D-Matrix größer als vorgegebene Schwellwerte sind.

Durch die anschließende lokale Maxima-Bestimmung der Werte der D-Matrix wird erreicht, daß in einer Szene mit dynamischem Hintergrund (Wolken) die D-Maxima in der Regel mit langsam bewegten, aber großen Objekten (Wolken) oder aufgetauchten kleinen Zielobjekten korrespondieren.

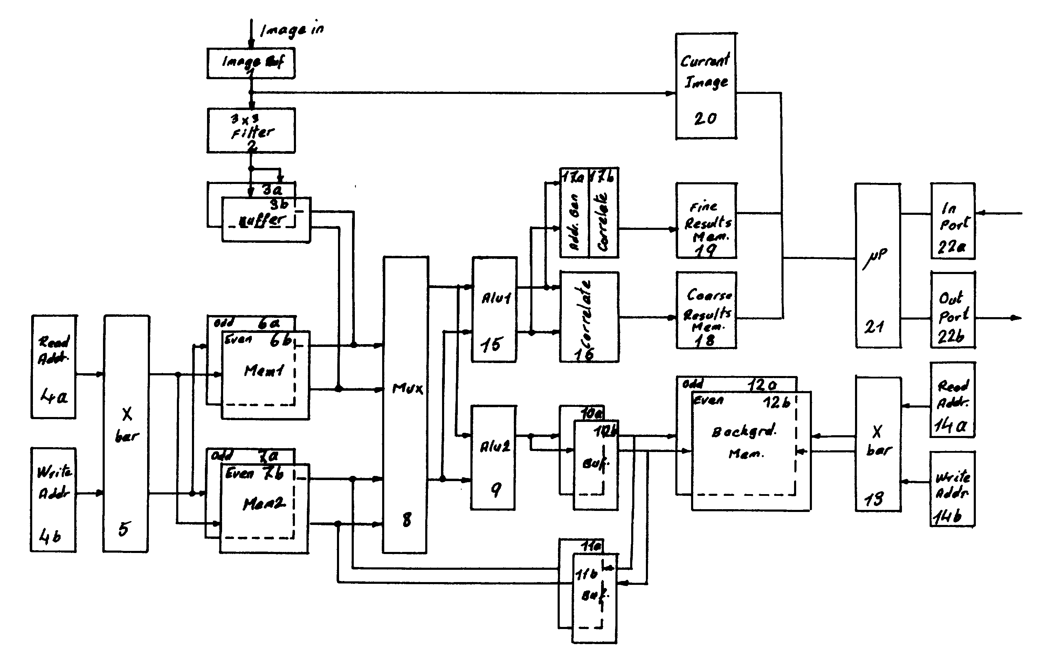

In der Zeichnung ist das Blockschaltbild einer Schaltungsanordnung zur Durchführung des erfindungsgemäßen Verfahrens dargestellt.

Die von einer zeichnerisch nicht dargestellten TV - oder IR-Kamera erzeugten, eine Sequenz von Bildern wiedergebenden Bildsignale werden über eine Interface-Schaltungsanordnung 1 einem Filter 2 zugeführt, wo eine Vorverarbeitung durchgeführt wird. Diese kann darin bestehen, daß die Bildsignale zu ihrer Glättung mit einer 3 x 3 Matrix gefaltet werden, so daß die Korrelation der gefilterten Bilder zu rauscharmen Ergebnissen für die weitere Verarbeitung führt.

Das erste von der Kamera gelieferte Bild wird nach seiner Vorverarbeitung als Start-Hintergrund-Bild in einem Hintergrundfensterspeicher (7a, 7b) gespeichert und in quadratische Sektoren gleicher Größe und vorgegebener Anzahl eingeteilt. Beispielsweise erfolgt eine Einteilung in 32 x 32 Bildpunkten. Alle weiteren von der Kamera bereitgestellten Bilder werden ebenfalls im Filter 2 vorverarbeitet, in einem Fensterspeicher (6a, 6b) gespeichert und ebenso wie das Start-Hintergrund-Bild in quadratische Sektoren gleicher Größe und gleicher Anzahl, beispielsweise in 32 x 32 Bildpunkte, eingeteilt. Für die Einteilung in Fenster und den korrekten Ablauf sorgen die Blöcke 3 bis 8, 10, 11, 13 und 14.

Aus Gründen einer schritthaltenden Signalverarbeitung in der Realisierung wird ein Tandembetrieb verwendet. Daher sind die Pufferspeicher 3a, 3b zur Versorgung der Fensterspeicher 6a, 6b, die Pufferspeicher 11a, 11b zur Versorgung der Hintergrundfensterspeicher 7a, 7b, die Pufferspeicher 10a, 10b zur Versorgung der Hintergrundspeicher 12a, 12b sowie die Fensterspeicher 6a, 6b, 7a, 7b und der Hintergrundspeicher 12a, 12b geteilt ausgeführt. Schreib- und Leseadresseinrichtungen 4a, 4b und 14a, 14b sind takt- und fenstersynchron über Kreuzschienenschalter 5 bzw. 13 mit den Speichern verschaltet. Zwei ALU- Bausteine 9 und 15 stellen über einen Multiplexer 8 die Verbindung zwischen den Fensterspeichern einerseits und dem Hintergrundspeicher sowie den Korrelationseinrichtungen 16, 17a, 17b andererseits her.

In den Korrelationseinrichtungen werden die Korrelationsergebnisse der Fenster eines jeden nachfolgenden Bildes mit seinem korrespondierenden Hintergrundfenster berechnet und in Matrizen gespeichert. So liefert die Korrelationseinrichtung 16 Korrelationsergebnisse für einen R - Speicher 18 (Result-/Ergebnisspeicher), in dem die R - Matrix (Result-/Ergebnis-Matrix) gespeichert wird. Der Korrelationseinrichtung 16 ist ein Mikroprozessorsystem 21 nachgeordnet, das seine Kommandos über den Baustein 22a erhält, das seine Ergebnisse über den Baustein 22b abliefert und mit dem die im Hauptanspruch aufgeführten Verfahrensschritte 5 bis 10 durchgeführt werden. Dieses sind
- die Transformation der R-Matrix in eine gleichgroße L-Matrix (Level-/Niveau-Matrix),
- die Durchführung eines Lernprozesses des Ähnlichkeitsgrades zwischen zwei aufeinanderfolgenden Bildausschnitten,
- die Bildung einer D-Matrix(Differenz-Matrix), deren Werte einer lokalen Maxima-Bestimmung unterworfen werden,
- die Bestimmung einer S-Matrix (Such-Matrix) dadurch, daß die mit einem Maximum in der D-Matrix korrespondierenden Stellen auf den Wert "Eins" und alle übrigen Werte in der D-Matrix auf den Wert "Null" gesetzt werden,
- die Berechnung der näherungsweisen Position von Zielobjekten in den nachfolgenden Bildern durch eine Detailanalyse der Bilder, deren Fenster in der S-Matrix durch den Wert "Eins" gekennzeichnet sind, und
- die Eintragung der Positionsergebnisse der Zielobjekte und anderer relevanter Parameter der Ergebnisse in eine Liste sowie die Durchführung der Schlußanalyse.

Eine zweite Korrelationseinrichtung 17a, 17b dient zusammen mit den Blöcken 15, 16 und 19 zur Durchführung der Detailanalyse, wobei die Fenster des Hintergrund-Bildes und jedes nachfolgenden Bildes in 16 gleiche Sektoren eingeteilt werden. Jeder Sektor eines nachfolgenden Bildes wird mit dem korrespondierenden Sektor des Hintergrund-Bildes korreliert. Die Korrelationsergebnisse können in einem Detailspeicher 19 in einer 4 x 4 Matrix gespeichert werden, wobei der Detailspeicher 19 ebenfalls dem Mikroprozessorsystem 21 vorgeschaltet ist. Auch können diejenigen Korrelationsergebnisse, die unterhalb vorgegebener Schwellwerte liegen, für eine Flächen-Schwerpunktberechnung verwendet werden, wobei die ermittelten Schwerpunkte die Positionen von potentiellen Zielobjekten markieren und in einer Liste gespeichert werden.

Bei der Schlußanalyse zur Bestimmung der Zielobjekte wird eine Berechnung des Verhältnisses von Zielobjektsignal (z. B. hellster Punkt) zum Rauschsignal (Streuung des Signals in der Umgebung), mittels des Mikroprozessorsystems 21 durchgeführt, wobei vorzugsweise Zielobjekte mit Ergebnissen, die unterhalb von vorgegebenen Werten liegen, unterdrückt werden. Nach der Schluß-analyse kann der Hintergrundspeicher 7a, 7b mit den Positionsergebnissen und Parametern direkt aufgefrischt werden, z. B. gemäß DE-Patentanmeldung DE-A-3 606 009. Nach diesem Auffrischen mit Hilfe der Bausteine 10a, 10b, 12a und 12b können die oben genannten Verfahrensschritte 5 bis 10 des Hauptanspruches direkt durchgeführt werden.

## Patentansprüche

1. Verfahren zur Überwachung von Gelände im TV- oder IR-Bereich zwecks Detektion und Bestimmung von vorzugsweise kleinen Zielobjekten in einer Sequenz von Bildern unter Verwendung einer räumlich feststehenden Kamera und einer nachgeordneten Auswerteschaltungsanordnung, **gekennzeichnet** durch folgende Verfahrensschritte:
1, das erste von der Kamera gelieferte Bild wird durch Filterung vorverararbeitet und als Start-Hintergrund-Bild in einem Hintergrundfensterspeicher (7a, 7b) gespeichert,
2, das gespeicherte Start-Hintergrund-Bild wird in quadratische Hintergrundfenster gleicher Größe und vorgegebener Anzahl eingeteilt,
3, jedes nachfolgende, von der Kamera bereitgestellte und durch Filterung vorverarbeitete Bild wird in einem Fensterspeicher (6a, 6b) gespeichert und wie das Start-Hintergrund-Bild in quadratische Fenster gleicher Größe und gleicher Anzahl eingeteilt,
4, die Korrelationsergebnisse jedes Fensters eines nachfolgenden Bildes mit seinem korrespondierenden Hintergrundfenster werden berechnet und in einer R-Matrix gespeichert, wobei jedes Korrelationsergebnis ein Element für die R-Matrix liefert,
5, die Werte der ersten R-Matrix werden in eine gleichgroße L-Matrix übernommen,
6, für alle nachfolgenden Bilder werden die Werte der R-Matrix mit den Werten der korrespondierenden L-Matrix verglichen und als Werte von einer neuen L-Matrix übernommen, falls die Werte der R-Matrix größer sind als die Werte der L-Matrix und somit eine höhere Ähnlichkeit zwischen korrespondierenden aktuellen Fenstern und Hintergrundfenstern vorliegt,
7, aus den Werten der R-Matrix und L-Matrix wird eine Differenz Matrix, weiterhin bezeichnet als D-matrix, gebildet, deren Werte einer lokalen Maxima-Bestimmung unterworfen werden,
8, anschließend wird eine S-Matrix dadurch bestimmt, daß die mit einem Maximum in der D-Matrix korrespondierenden Stellen auf den Wert "Eins" und alle übrigen Werte in der D-Matrix auf den Wert "Null" gesetzt werden,
9, die in der S-Matrix durch den Wert "Eins" gekennzeichneten Fenster der nachfolgenden Bilder werden einer Detailanalyse unterzogen zur Berechnung der näherungsweisen Position von Zielobjekten in den nachfolgenden Bildern, und
10, die Positionsergebnisse der Zielobjekte und andere relevante Parameter der Ergebnisse werden in eine Liste eingetragen und einer Schlußanalyse unterzogen.

2. Verfahren nach Anspruch 1, dadurch gekennzeichnet, daß der Hintergrundfensterspeicher (7a, 7b) nach der Schluß-Analyse mit den Positionsergebnissen und Parametern direkt aufgefrischt wird und anschließend die Verfahrensschritte 5 bis 10 durchgeführt werden.

3. Verfahren nach Anspruch 1, dadurch gekennzeichnet, daß bei der Bildung der D-Matrix die Werte der D-Matrix
- auf Null gesetzt werden, wenn die Werte der R-Matrix größer als die Werte der L-Matrix sind,
- als positive Differenzwerte gespeichert werden, wenn die Werte der R-Matrix kleiner als die Werte der L-Matrix sind, und
- weiteren Analysen unterzogen werden, wenn die Werte der D-Matrix größer als vorgegebene Schwellwerte sind.

4. Verfahren nach Anspruch 1 oder 2, dadurch gekennzeichnet, daß zur Durchführung der Detailanalyse die Fenster des Hintergrund-Bildes und die Fenster eines nachfolgenden Bildes in 16 gleiche Sektoren eingeteilt werden, daß jeder Sektor eines nachfolgenden Bildes mit dem korrespondierenden Sektor des Hintergrund-Bildes korreliert wird, und daß die Korrelationsergebnisse in einer 4 x 4 Matrix gespeichert werden.

5. Verfahren nach Anspruch 1 oder 2, dadurch gekennzeichnet, daß zur Durchführung der Detailanalyse die Fenster des Hintergrund-Bildes und die Fenster eines nachfolgenden Bildes in 16 gleiche Sektoren eingeteilt werden, daß jeder Sektor eines nachfolgenden Bildes mit dem korrespondierenden Sektor des Hintergrund-Bildes korreliert wird, daß diejenigen Korrelationsergebnisse, die unterhalb vorgegebener Schwellwerte liegen, für eine Flächen-Schwerpunktberechnung verwendet werden, und daß die ermittelten Schwerpunkte näherungsweise die Positionen von potentiellen Zielobjekten markieren und in einer Liste gespeichert werden.

6. Verfahren nach Anspruch 1 oder 2, dadurch gekennzeichnet, daß zur Bestimmung der Zielobjekte bei der Schluß-Analyse eine Berechnung des Verhältnisses von Zielobjektsignal zum Rauschsignal durchgeführt wird, und daß Zielobjekte mit Ergebnissen, die unterhalb von vorgegebenen Verhältniswerten liegen, unterdrückt werden.

7. Verfahren nach Anspruch 1, dadurch gekennzeichnet, daß jedes von der Kamera gelieferte Bild zu seiner Glättung mit einer 3 x 3 Matrix derart gefaltet wird, daß die nachfolgende Korrelation der gefilterten Bilder rauscharme Ergebnisse für die weitere Verarbeitung liefert.

8. Verfahren nach Anspruch 1, dadurch gekennzeichnet, daß jedes von der Kamera gelieferte Bild in quadratische Sektoren mit einer Größe von 32 x 32 Bildpunkten eingeteilt werden.

9. Verfahren nach Anspruch 1, gekennzeichnet durch die Verwendung von 8 x 8 Matrixen.

10. Verfahren nach Anspruch 1, gekennzeichnet durch eine hierarchische Struktur derart, daß für die Bildanalyse folgende Reihenfolge eingehalten wird:
1) Analyse großer Bereiche, hier 32 x 32 Bildpunkte
2) Analyse kleiner Bereiche, hier 8 x 8 Bildpunkte
3) Analyse des Zielobjektsignals, hier hellster Punkt.

## Claims

1. Process for monitoring terrain in the TV or IF range for the purpose of detection and verification of preferably small target objects in a sequence of images, using a spatially fixed camera and a downstream evaluation circuit arrangement, **characterised by** the following procedural stages:
1: the first image delivered by the camera is preprocessed by filtering and stored as an initial background image in a background-window memory (7a, 7b);
2: the stored initial background image is divided into square background windows of identical size and of a specified number;
3: each subsequent image made available by the camera and preprocessed by filtering is stored in a window memory (6a, 6b) and, like the initial background image, divided into square windows of identical size and identical number;
4: the correlation results of each window of a subsequent image with its corresponding background window are calculated in stored in an R-matrix, and each correlation result delivers an element for the R-matrix;
5: the values of the first R-matrix are transferred into an L-matrix of identical size;
6: for all subsequent images, the values of the R-matrix are compared to the values of the corresponding L-matrix and adopted as values by a new L-matrix if the values of the R-matrix are higher than the values of the L-matrix with greater similarity between corresponding actual windows and background windows;
7: from the values of the R-matrix and L-matrix is formed a difference matrix, hereinafter described as D-matrix, the values of which are subjected to a local maxima definition;
8: thereafter, an S-matrix is determined in that the points which correspond with a maximum in the D-matrix are set to a value "One", and all other values in the D-matrix are set to "Zero";
9: windows of subsequent images characterised in the S-matrix by value "One" are subjected to a detail analysis for calculating the approximate position of target objects in subsequent images; and
10: the position results of the target objects and other relevant parameters of the results are entered into a list and subjected to a final analysis.

2. Process according to Claim 1, **characterised in that** the background window memory (7a, 7b) is, after the final analysis, directly refreshed with the position results and parameters whereafter procedural stages 5 to 10 are carried out.

3. Process according to Claim 1, **characterised in that** when establishing the D-matrix the values of the D-matrix
- are set to zero when the values of the R-matrix are higher than the values of the L-matrix;
- are stored as positive differential values when the values of the R-matrix are lower than the values of the L-matrix; and
- are subjected to further analyses when the values of the D-matrix are higher than specified threshold values.

4. Process according to Claim 1 or 2, **characterised in that** for the purpose of carrying out the detail analysis, the windows of the background image and the windows of a subsequent image are divided into 16 equal sectors, and each sector of a subsequent image is correlated with the corresponding sector of the background image, and the correlation results are stored in a 4 x 4 matrix.

5. Process according to Claim 1 or 2, **characterised in that**, for the purpose of carrying out the detail analysis, the windows of the background image and the windows of a subsequent image are divided into 16 equal sectors, and each sector of a subsequent image is correlated with the corresponding sector of the background image, and those correlation results lying below specified threshold values are utilised for a surface centre of mass calculation, and the determined centres of mass approximately mark the positions of potential target objects and are stored in a list.

6. Process according to Claim 1 or 2, **characterised in that**, for the purpose of determining the target objects, a calculation of the ratios between target object signal and noise signal is carried out during the final analysis, and target objects with results below specified ratio values are suppressed.

7. Process according to Claim 1, **characterised in that** each image delivered by the camera is for the purpose of smoothing folded with a 3 x 3 matrix in such a manner that the subsequent correlation of the filtered images delivers low-noise results for further processing.

8. Process according to Claim 1, **characterised in that** each image delivered by the camera is divided into square sectors of 32 x 32 image points.

9. Process according to Claim 1, **characterised by** the use of 8 x 8 matrixes.

10. Process according to Claim 1, **characterised by** a hierarchical structure in such a manner that the following order is adhered to for the image analysis:
1: Analysis of large areas, here 32 x 32 image points
2: Analysis of small areas, here 8 x 8 image points
3: Analysis of the target object signal, here the brightest point.

## Revendications

1. Procédé de surveillance de terrain dans le domaine visible ou dans le domaine IR à des fins de détection et de détermination d'objets cibles, de préférence de petite taille, dans une séquence d'images en utilisant une caméra fixe dans l'espace et un agencement de circuit de traitement associé, caractérisé par les étapes de procédé suivantes:
1, on soumet la première image fournie par la caméra à un pré-traitement par filtrage et on la mémorise en tant qu'image d'arrière-plan initiale dans une mémoire de fenêtre d'arrière plan (7a, 7b),
2, on subdivise l'image d'arrière-plan initiale mémorisée en fenêtres d'arrière-plan carrées de même dimension, dont le nombre est prédéterminé,
3, on mémorise dans une mémoire de fenêtre (6a, 6b) chaque image suivante fournie par la caméra et prétraitée par filtrage et on la divise comme l'image d'arrière plan initiale en un nombre identique de fenêtres carrées identiques,
4, on calcule les résultats de la corrélation de chaque fenêtre d'une image suivante avec sa fenêtre d'arrière-plan correspondante et on les mémorise dans une matrice R, chaque résultat de corrélation fournissant un élément pour la matrice R,5,
5, on transfère les valeurs de la première matrice R dans une matrice L de même dimension,
6, pour toutes les images suivantes, on compare les valeurs de la matrice R aux valeurs de la matrice L correspondante et on les insère comme valeurs dans une nouvelle matrice L lorsque les valeurs de la matrice R sont supérieures aux valeurs de la matrice L et que la similitude entre fenêtres actuelles et fenêtres d'arrière-plan correspondantes est plus grande,
7, à partir des valeurs de la matrice R et de la matrice L, on forme une matrice différentielle, désignée matrice D, dont les valeurs sont soumises à une détermination de maxima locale,
8, puis on définit une matrice S par le fait que les points qui correspondent à un maximum dans la matrice D reçoivent la valeur "un" et toutes les autres valeurs dans la matrice D la valeur zéro",
9, on soumet les fenêtres des images suivantes caractérisées par la valeur "un" dans la matrice S à une analyse détaillée, aux fins de déterminer la position approximative d'objets-cibles dans les images suivantes et
10, on inscrit dans une liste les résultats de position des objets-cibles et d'autres paramètres importants des résultats et on les soumet à une analyse finale.

2. Procédé selon la revendication 1, caractérisé par le fait que l'on rafraîchit directement la mémoire de fenêtre d'arrière-plan (7a, 7b) avec les résultats de position et les paramètres après l'analyse finale et qu'on déroule ensuite les étapes de procédé 5 à 10.

3. Procédé selon la revendication 1, caractérisé par le fait que lors de la formation de la matrice D
- on amène à zéro les valeurs de la matrice D lorsque les valeurs de la matrice R sont supérieures aux valeurs de la matrice L
- on mémorise les valeurs de la matrice D sous forme de valeurs différentielles positives lorsque les valeurs de la matrice R sont inférieures aux valeurs de la matrice L et
- on soumet les valeurs de la matrice D à des analyses supplémentaires lorsque les valeurs de la matrice D sont supérieures à des valeurs seuils prédéterminées.

4. Procédé selon la revendication 1 ou 2, caractérisé par le fait que pour effectuer l'analyse détaillée, on divise les fenêtres de l'image d'arrière-plan et les fenêtres d'une image suivante en 16 secteurs semblables, qu'on corrèle chaque secteur d'une image suivante avec le secteur correspondant de l'image d'arrière-plan, et qu'on mémorise les résultats de la corrélation dans une matrice 4*4.

5. Procédé selon la revendication 1 ou 2, caractérisé par le fait que pour effectuer l'analyse détaillée, on divise les fenêtres de l'image d'arrière-plan et les fenêtres d'une image suivante en 16 secteurs semblables, qu'on corrèle chaque secteur d'une image suivante avec le secteur correspondant de l'image d'arrière-plan, qu'on utilise les résultats de corrélation qui sont inférieures à des valeurs seuils prédéfinies pour un calcul de point prépondérant de surface et que les points prépondérants déterminés marquent approximativement les positions d'objets cibles potentiels et sont mémorisés dans une liste.

6. Procédé selon la revendication 1 ou 2, caractérisé par le fait que pour déterminer les objets-cibles lors de l'analyse finale on procède à un calcul du rapport de l'objet-cible au signal de bruit et que l'on élimine les objets-cibles dont les résultats sont inférieurs à des valeurs de rapport prédéterminées.

7. Procédé selon la revendication 1, caractérisé par le fait qu'on replie chaque image fournie par la caméra avec une matrice 3*3 à des fins de lissage, de sorte que la corrélation suivante des images filtrées, pour la poursuite du traitement, délivre des résultats avec un faible bruit.

8. Procédé selon la revendication 1, caractérisé par le fait qu'on divise chaque image fournie par la caméra en secteurs carrés avec une dimension de 32 * 32 points.

9. Procédé selon la revendication 1, caractérisé par l'utilisation de matrices 8*8.

10. Procédé selon la revendication 1, caractérisé par une structure hiérarchique telle que l'on respecte, pour l'analyse d'image, la séquence suivante
1 analyse de zones de grande taille, ici 32*32 points
2 analyse de petites zones, ici 8*8 points
3 analyse du signal d'objet-cible, ici point plus lumineux.
